# EUROPEAN PATENT APPLICATION

(11) **EP 4 710 750 A1**
(43) Date of publication of application: **18.03.2026**
(21) Application number: 25198584.2
(22) Date of filing: 28.08.2025
(51) Int. Cl.: A01D 89/00, A01F 15/10

(54) **TWIN ROLLER WINDGUARD**

(30) Priority: 16.09.2024 US 202418885968
(71) Applicant: CNH Industrial America LLC, New Holland, PA 17557 (US)
(72) Inventor: Shenk, Jonathan, New Holland, 17557 (US)
(74) Representative: CNH Industrial IP Department

(57) **Abstract**

Disclosed is an agricultural baler assembly having, a pickup assembly, a primary roller assembly and a secondary roller assembly. The pickup assembly includes a tine reel with tines that rotate about a rotation axis and a pickup drum surrounding a portion of the tine reel. The primary roller assembly has a primary roller mounted to the baler assembly frame by primary roller arms that pivot about a primary roller arm pivot axis. The secondary roller assembly has a secondary roller mounted to the primary roller arms or the baler assembly frame by secondary roller arms that pivot about a secondary roller arm pivot axis. The primary roller rotation axis is spaced a first distance from the primary roller arm pivot axis; and the secondary roller rotation axis is spaced a second distance from the primary roller arm pivot axis, and the second distance is less than the first distance.

## Description

### FIELD OF THE INVENTION

The present invention pertains to agricultural equipment, such balers.

### BACKGROUND OF THE INVENTION

Agricultural balers have been used for many years to consolidate and package crop material to facilitate the storage and handling of the crop material for later use. Usually, a mower-conditioner cuts and conditions the crop material into windrows for drying in the sun, and when the cut crop material is properly dried, a baler is pulled along the windrows to pick up the crop material and form it into round or square bales. The baler includes a pickup with a tine reel that gathers the cut and windrowed crop material from the ground, and then conveys the cut crop material with a conveyor, such as a rotating conveying rotor, into a bale-forming chamber within the baler. The pickup assembly has a drive mechanism that operates to activate both the pickup tine reel and the conveying rotor, and the pickup drive mechanism is operably connected to and driven by the main drive mechanism of the baler. The baling chamber consists of a pair of opposing sidewalls with a series of belts that rotate and compress the crop material into a cylindrical shape. When the bale has achieved a desired size and density, the baler wraps the bale with twine or other wrapping material, such as film or net, to ensure that the bale maintains its shape and density. Then the operator raises the tailgate of the baler and ejects the bale onto the ground. The tailgate is then closed and the cycle repeated as necessary and desired to manage the field of cut crop material.

A typical "overshot" baler includes a spinning tine reel that lifts and projects crop material towards the bale forming chamber. It is known to provide a windguard roller in front of the tine reel to help control how the crop material is processed. For example, U.S. Pat. No. 10,028,438 shows an agricultural baler having a windguard roller pivotally mounted to the baler frame and positioned in front of the pickup roller, and U.S. Pre-Grant Publication No. 2013/0000497 shows an agricultural baler having a windguard roller located above the pickup roller an immediately forward of the compression rollers. The foregoing references are incorporated herein be reference for all purposes. Baler pickups also have been provided with upstream and downstream windguard rollers fixed together on a single arm assembly, such that the two windguard rollers always move in unison with each other.

While various windguard rollers are known, the inventor has determined that the state of the art can still be advanced.

### BRIEF SUMMARY OF THE INVENTION

In a first exemplary embodiment, there is provided an agricultural baler assembly including: a baler assembly frame; a pickup assembly mounted to the baler assembly frame; a primary roller assembly, and a secondary roller assembly. The pickup assembly includes a tine reel configured to rotate about a tine reel rotation axis, a plurality of tines extending perpendicular to the tine reel rotation axis, and a pickup drum surrounding at least a forward side of the tine reel and having slots through which the plurality of tines extend. The primary roller assembly includes primary roller arms pivotally mounted to the baler assembly frame to pivot about a primary roller arm pivot axis and a primary roller rotatably mounted to the primary roller arms at a primary roller rotation axis that extends parallel to the tine reel rotation axis. The secondary roller assembly includes secondary roller arms pivotally mounted to the baler assembly frame or the primary roller arms to pivot about a secondary roller arm pivot axis and a secondary roller rotatably mounted to the secondary roller arms at a secondary roller rotation axis that extends parallel to the tine reel rotation axis. The primary roller rotation axis is spaced a first distance from the primary roller arm pivot axis, the secondary roller rotation axis is spaced a second distance from the primary roller arm pivot axis, and the second distance is less than the first distance.

In a second exemplary embodiment, there is provided an agricultural baler having: a main frame; wheels supporting the main frame for movement on a ground surface; a bale-forming chamber; and an agricultural baler assembly according to the first exemplary embodiment operatively connected to the main frame with the pickup assembly arranged to pick up crop material from the ground surface and direct the crop material towards the bale-forming chamber.

In a third exemplary embodiment, there is provided an agricultural baler pickup windguard assembly having: a primary roller assembly; a secondary roller assembly; and a lock. The primary roller assembly includes: a first primary roller arm extending from a respective distal end to a respective proximal end having a first primary roller arm pivot, a second primary roller arm extending from a respective distal end to a respective proximal end having a second primary roller arm pivot, wherein the first primary roller arm pivot and the second primary roller arm pivot are configurable to be aligned along a primary roller arm pivot axis, and a primary roller extending along a primary roller rotation axis from a first primary roller end attached to the respective distal end of the first primary roller arm to a second primary roller end attached to the respective distal end of the second primary roller arm, wherein the primary roller is configured to rotate relative to the first primary roller arm and the second primary roller arm about the primary roller rotation axis. The secondary roller assembly includes: a first secondary roller arm extending from a respective distal end to a respective proximal end having a first secondary roller arm pivot, a second secondary roller arm extending from a respective distal end to a respective proximal end having a second secondary roller arm pivot, wherein the first secondary roller arm pivot and the second secondary roller arm pivot are configurable to be aligned along a secondary roller arm pivot axis, and a secondary roller extending along a secondary roller rotation axis from a first secondary roller end attached to the respective distal end of the first secondary roller arm to a second secondary roller end attached to the respective distal end of the second secondary roller arm, wherein the secondary roller is configured to rotate relative to the first secondary roller arm and the second secondary roller arm about the secondary roller rotation axis. The lock is configured to be movable between: a disengaged position in which the primary roller assembly is pivotable about the primary roller arm pivot axis and the secondary roller assembly is separately pivotable about the secondary roller arm pivot axis, and an engaged position in which the primary roller assembly is pivotable about the primary roller arm pivot axis and the secondary roller assembly is connected to the primary roller assembly to rotate in a predefined relationship with the primary roller assembly. The primary roller rotation axis is parallel to the primary roller arm pivot axis and is spaced from the primary roller arm pivot axis by a first distance, the secondary roller rotation axis is parallel to the primary roller arm pivot axis and is spaced from the primary roller arm pivot axis by a second distance, and the second distance is less than the first distance.

This summary is illustrative only and is not intended to be in any way limiting. Other aspects, inventive features, and advantages of the devices or processes described herein will become apparent in the detailed description set forth herein, taken in conjunction with the accompanying figures.

### BRIEF DESCRIPTION OF THE SEVERAL VIEWS OF THE DRAWINGS

For the purpose of illustration, there are shown in the drawings certain embodiments of the present invention. It should be understood, however, that the invention is not limited to the precise arrangements, dimensions, and instruments shown. Like numerals indicate like elements throughout the drawings. In the drawings:
FIG. 1 illustrates an example of a conventional agricultural baler.
FIG. 2 is a perspective view of an exemplary embodiment of an agricultural baler assembly having a pickup windguard assembly.
FIG. 3 is a perspective view of an exemplary embodiment of a pickup windguard assembly.
FIG. 4 is a first cutaway perspective view of the agricultural baler assembly of FIG. 2.
FIG. 5 is a second cutaway perspective view of the agricultural baler assembly of FIG. 2.
FIG. 6 is a schematic side view of the agricultural baler assembly of FIG. 2 with the pickup windguard assembly operating in an unlocked state.
FIG. 7 is a schematic side view of the agricultural baler assembly of FIG. 2 with the pickup windguard assembly operating in a locked state.
FIG. 8 is an exemplary embodiment of a lock that may be used with embodiments of pickup windguard assemblies.
FIG. 9 is an exemplary embodiment of a lock that may be used with embodiments of pickup windguard assemblies.
FIG. 10 is an exemplary schematic side view of an exemplary tine bar adjustment mechanism that may be used with embodiments of pickup windguard assemblies.
FIG. 11 is another exemplary embodiment of a pickup windguard assembly operating in an unlocked state.
FIG. 12 is another exemplary embodiment of a pickup windguard assembly operating in a locked state.

### DETAILED DESCRIPTION OF THE INVENTION

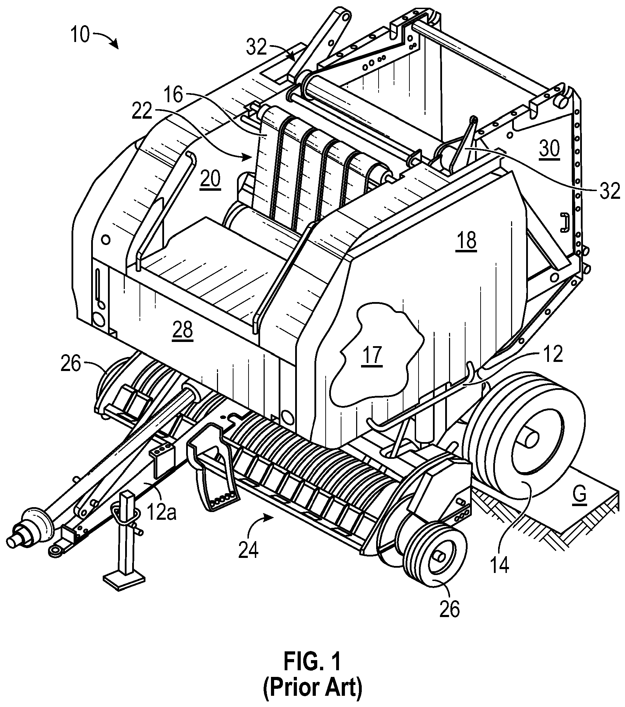

A generally well-known baler 10 is shown in FIG. 1. This type of baler 10 is known as a round baler because it creates cylindrical bales. Other conventional balers 10 may form the crop material into square bales, or bales having other shapes. The baler 10 includes a main frame 12 terminating forwardly at a tongue 12a that is configured to connect to a prime mover such as a tractor. In this case, the baler 10 is operated as towed equipment. In other cases, the baler 10 may be integrated directly into, or include features to make it, a self-driving baling vehicle. Wheels 14 (only one shown) are operatively connected to the main frame 12 to support the main frame 12 for movement on the underlying ground surface G. The baler 10 also includes a series of belts 16, rollers (not shown), a first internal sidewall 17 (shown in the breakout behind and an outer cover panel 18), and a second sidewall 20 that collectively define a bale-forming chamber 22.

A transversely-extending pickup 24 is mounted to the main frame 12 and configured to feed crop material towards or into the bale-forming chamber 22. The pickup 24 may be operatively connected to the main frame 12 by pivots, linkages, or the like. The pickup 24 also typically includes pickup wheels 26 that support the pickup 24 for movement on the ground G. Additional features, such as compression rolls, transverse augers, and the like, may be included to assist with directing the crop material from the ground G to the bale-forming chamber, The crop material fed into the bale-forming chamber 22 is formed into a cylindrically or otherwise shaped bale in a manner known in the art. The bale is then wrapped with twine or a wrapping material dispensed from a wrapping mechanism which might be provided behind a forward shield 28. Upon completion of the wrapping process, a tailgate 30 mounted at the rear end of the baler 10 pivots upwardly about pivot points 32, and the bale is discharged onto the ground.

The foregoing features of a baler 10, as well as power supply systems, electronics, sensors and the like, are generally known in the art, and need not be described in greater detail herein.

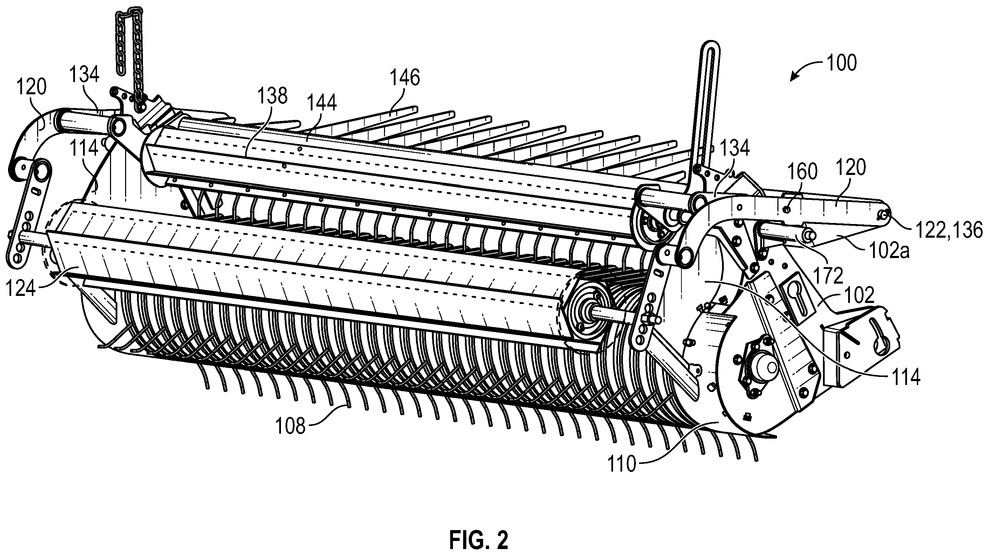

FIGS. 2-5 show an embodiment of a baler assembly 100, such as potions of a pickup 24, that may be used with a conventional baler 10 such as the round baler 10 shown in FIG. 1 or other balers (e.g., square balers, self-driving balers, and balers of other general constructions).

The baler assembly 100 includes a baler assembly frame 102 upon which other parts are mounted. The baler assembly frame 102 may comprise a single structure or an interconnected structure of parts, as known in the art. A tine reel 104 is rotatably mounted on the baler assembly frame 102. The tine reel 104 has multiple (in this example, five) tine bars 106 that rotate about a central tine reel rotation axis 104a. Each tine bar 106 includes a plurality of teeth or tines 108 that extend perpendicular to the tine reel rotation axis 104a. As the tine reel 104 rotates, the tines 108 pick up crop material from the ground, lift it upwards, and project it rearwardly over the top of the tine reel 104 and towards the bale-forming chamber 22. Inlet sidewalls 114 may be provided at each lateral end of the tine reel 104 to help guide crop material.

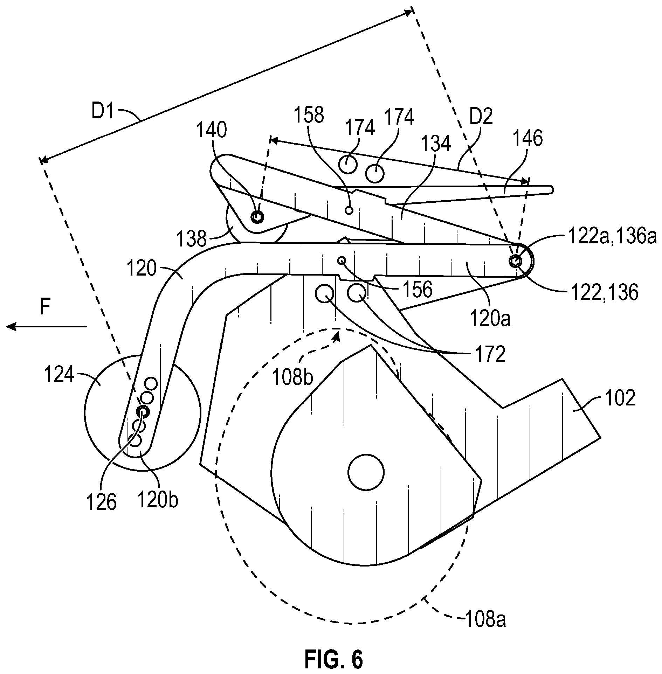

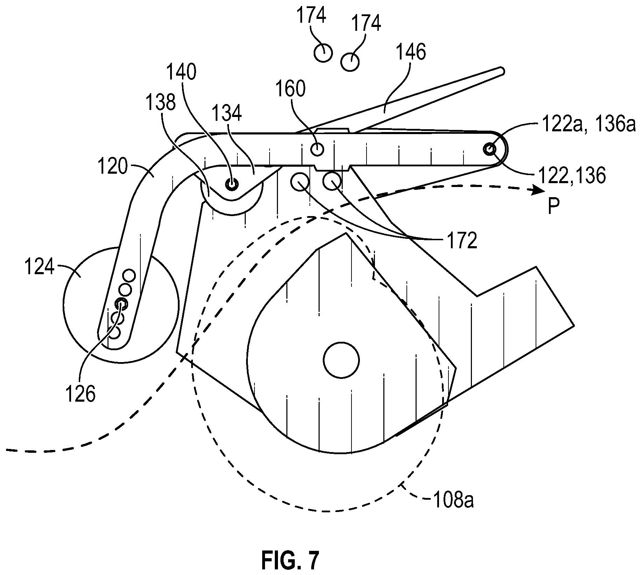

Each tine bar 106 also may be pivotally connected to the remainder of the tine reel 104 and manipulated by a cam and follower arrangement or the like, to alter the angles of the tines 108 as the tine reel 104 rotates, resulting in the tips of the tines 108 defining a non-circular tine path 108a (see FIGS. 6 and 7). This can be beneficial to, for example, improve crop pickup from the ground and accelerate the crop material towards the bale-forming chamber 22. The tine reel 104 is located within a pickup drum 110 that surrounds a forward side 104b of the tine reel 104. The pickup drum 110 has slots 112 through which the tines 108 project. The pickup drum 110 inhibits crop material from interfering with the tine reel 104 and helps strip crop material from the tines 108 as the crop material approaches the bale-forming chamber 22.

A motor and drive assembly (not shown), such as a hydraulic or electric motor, or a power-take-off from an internal combustion engine, are provided to drive the tine reel 104, as known in the art.

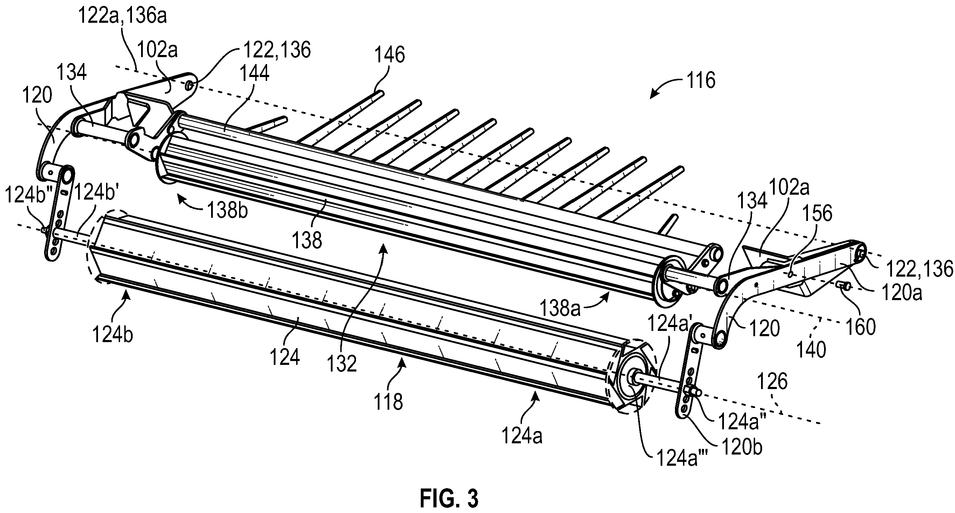

The baler assembly 100 also includes a windguard assembly 116, which is shown separately in FIG. 3. The windguard assembly 116 generally includes a primary roller assembly 118 and a secondary roller assembly 132 and may also include a tine bar 144.

The primary roller assembly 118 generally includes primary roller arms 120 that are pivotally connected at one end to the baler assembly frame 102 and at the other end to a primary roller 124. In the shown example, each primary roller arm 120 is constructed with as a welded assembly of a first arm portion, a second arm portion, and a lateral extension joining the first arm portion to the second arm portion, but other constructions may be used. Each primary roller arm 120 extends from a respective proximal end 120a to a respective distal end 120b. A respective primary roller arm pivot 122 is provided at the proximal end 120a of each primary roller arm 120. The primary roller arm pivots 122 may comprise any structure suitable to provide a pivoting connection with the baler assembly frame 102, such as a bushing or bearing mounted on a pin or shaft, or the like. In this case, the primary roller arm pivots 122 are shown a pins that are fixed to the baler assembly frame 102, and that extend through corresponding holes through the primary roller arm 120. When assembled to the baler assembly frame 102, the primary roller arm pivots 122 are aligned along a common primary roller arm pivot axis 122a, which is parallel to the tine reel rotation axis 104a.

The primary roller 124 is mounted to extend, between the distal ends 120b of the primary roller arms 120, from a first primary roller end 124a to a second primary roller end 124b. The primary roller 124 may be mounted on a shaft with a first shaft end 124a' that is connected to a first primary roller arm 120 via a threaded nut 124a'', and a second shaft end 124b' that is connected to a second primary roller arm 120 via threaded nut 124b". The primary roller 124 is mounted to the shaft by bearings 124a"', 124b‴ or the like, to thereby support the primary roller 124 for free rotation about a primary roller rotation axis 126. The primary roller rotation axis 126 is parallel to the primary roller arm pivot axis 122a and the tine reel rotation axis 104a.

In some examples, the primary roller arms 120 may include several mounting holes 130 to provide various locations for mounting the primary roller 124. This provides a degree of adjustability to vary the distance between the primary roller rotation axis 126 and the primary roller arm pivot axis 122a. Such adjustment allows the operator to change the position of the primary roller 124 to address different crop conditions.

The primary roller 124 may have any suitable construction for guiding the flow of crop. In the shown example, the primary roller 124 is a slatted roller comprising a plurality of slats 128 that each define a planar surface that extends in one direction along the primary roller rotation axis 126 and in the other direction along a radial or tangential angle to the primary roller rotation axis 126. In this case, the slats extend tangentially to the primary roller rotation axis 126, with each slat overlapping and extending beyond an adjacent edge of one adjacent slat, to interact with the incoming crop material, as known in the art. In other cases, the primary roller 124 may have other constructions, such as having a cylindrical shape or other geometric shapes.

The secondary roller assembly 132 generally includes secondary roller arms 134 that are pivotally connected at one end to the baler assembly frame 102 or the primary roller arms 120 and at the other end to a secondary roller 138. In the shown example, each secondary roller arm 134 is constructed with as a welded assembly of a first arm portion, a second arm portion, and a lateral extension joining the first arm portion to the second arm portion, but other constructions may be used. Each secondary roller arm 134 extends from a respective proximal end 134a to a respective distal end 134b. A respective secondary roller arm pivot 136 is provided at the proximal end 134a of each secondary roller arm 134. The secondary roller arm pivots 136 may comprise any structure suitable to provide a pivoting connection with the primary roller arms 120 and/or the baler assembly frame 102, such as a bushing or bearing mounted on a pin or shaft, or the like. In this case, the secondary roller arm pivots 136 are shown a simple pins that extend from the baler assembly frame 102, and through corresponding holes through both the primary roller arms 120 and the secondary roller arms 134. When assembled to the baler assembly frame 102, the primary roller arm pivot axis 122a is, in this case, collinear with the secondary roller arm pivot axis 136a. Thus, the primary roller arms 120 and the secondary roller arms 134 pivot about the same axis. In the shown example, the secondary roller arms 134 are mounted inboard of the primary roller arms 120, but this is not required in all cases.

The secondary roller 138 is mounted to extend between the distal ends 134b of the secondary roller arms 134. For example, a first secondary roller end 138a may be connected by a first rotatable connection to a first one of the secondary roller arms 134, and a second secondary roller end 138b may be connected by a second rotatable connection to a second one of the secondary roller arms 134. Thus, the secondary roller 138 is freely rotatable relative to the secondary roller arms 134 about a secondary roller rotation axis 140 that is parallel to the primary roller arm pivot axis 122a and the tine reel rotation axis 104a. These rotatable connections may comprise a shaft and bearings, as described above in relation to the primary roller 124, but other constructions may be used (e.g., stub axles may extend from each secondary roller arm 134 to engage bearings at each end of the secondary roller 134).

In some examples, the secondary roller arms 134 may include several mounting holes (not shown) like those in the primary roller arms 120 to provide various locations for mounting the secondary roller 134 thus allowing for adjustment for different crop conditions.

The secondary roller 138 may have any suitable construction for guiding the flow of crop. In the shown example, the secondary roller 138 is a slatted roller comprising a plurality of slats 128 like those described in relation to the primary roller 124. In other cases, the secondary roller 138 may have other constructions, such as having a cylindrical shape or other geometric shapes.

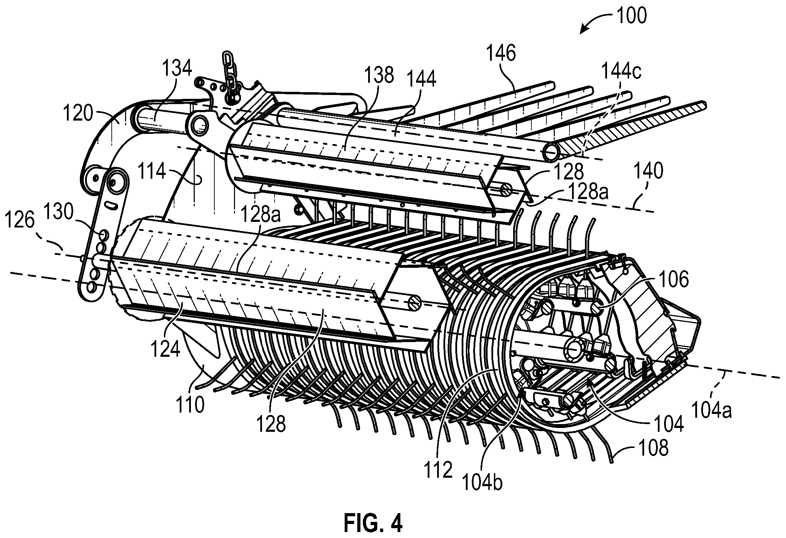

In a preferred embodiment, both the primary roller 124 and the secondary roller 138 are slatted rollers, and in a further preferred embodiment the primary roller 124 and secondary roller 138 have slats that are arranged with free edges 128a of each slat facing the incoming crop flow, as best shown in FIG. 4. However, other constructions may be used.

As shown in FIG. 6, the primary roller rotation axis 126 is spaced from the primary roller arm pivot axis 122a by a first distance D1, and the secondary roller rotation axis 140 is spaced from the primary roller arm pivot axis 122a by a second distance D2. The second distance D2 is less than the first distance D1. For example, the ratio of the second distance to the first distance may be in the range of 1:2 (50%) to 3:4 (75%).

Also as shown in FIG. 6, it is preferred (but not strictly required) for both the primary roller rotation axis 126 and the secondary roller rotation axis 140 to be located forward of the vertical apex 108b of the tine path 108a. The forward direction F is the direction in which the baler moves during operation, and upstream with respect to the crop flow. This arrangement is expected to better condition and guide the crop material over the tine reel 104 and into the bale-forming chamber 22. For example, this arrangement can provide some degree of crop funneling, as described below, without placing either the primary roller 124 or the secondary roller 138 in the path of the crop material as it is being ejected by the tines 108 towards the bale-forming chamber 22, and also helps prevent the primary roller 124 and secondary roller 138 from excessively compressing the crop flow. It is further preferred, but not strictly required, for the primary roller arm pivot axis 122a and secondary roller arm pivot axis 136a to be behind the vertical apex 108b of the tine path 108a. This provides a relatively long lever arm to allow a more linear travel path of the primary roller 124 and secondary roller 138, which can provide a more uniform application of force on the crop material and make the assembly less prone to variations in performance when processing irregular crop material.

The windguard assembly 116 also includes a lock that is configured to selectively connect one or both primary roller arms 120 to respective ones of the secondary roller arms 134. When the lock is disengaged, the primary roller assembly 118 and the secondary roller assembly 132 operate in an unlocked configuration, in which the primary roller assembly 118 and the secondary roller assembly 132 are independently pivotable about their respective pivot axes 122a, 136a. In this case, the secondary roller arm pivot axis 136a is collinear with the primary roller arm pivot axis 122a, so the primary roller assembly 118 and the secondary roller assembly 132 pivot about the same axis. When the lock is engaged, the primary roller assembly 118 and the secondary roller assembly 132 operate in a locked configuration, in which the primary roller assembly 118 and the secondary roller assembly 132 are locked together to pivot in unison about the primary roller arm pivot axis 122a.

The lock may comprise any suitable mechanism to lock one or more of the primary roller arms 120 to respective ones of the secondary roller arms 134. In the embodiments of FIGS. 2-5, the lock comprises locking pins 160, each of which is selectively insertable through a first hole 156 in one of the primary roller arms 120 and a second hole 158 (see FIG. 6) in one of the secondary roller arms 134. The first hole 156 and the second hole 158 are spaced from the primary roller arm pivot axis 122a, so that the locking pins 160 will react any force that would otherwise cause the primary roller assembly 118 and the secondary roller assembly 132 to pivot separately about the primary roller arm pivot axis 122a.

The locking pins 160 may comprise any suitable pin or pin-like structure. For example, the locking pins 160 may comprise simple pins, such as steel pins having a head to prevent excess travel through the first and second locking holes 156, 158, and a cotter pin or the like to hold each locking pin 160 in the inserted position. As another example, the locking pins 160 may comprise threaded fasteners, such as bolts, that can be secured through the locking holes 156, 158. Such devices can be readily installed and removed manually by an operator in relatively little time to thereby switch between the unlocked and locked configurations. If desired, the locking pin 160 may be mounted to one of the primary or secondary roller arms 120, 134 and provided with a linkage or other hand-operated mechanism to engage and disengage the locking pin 160.

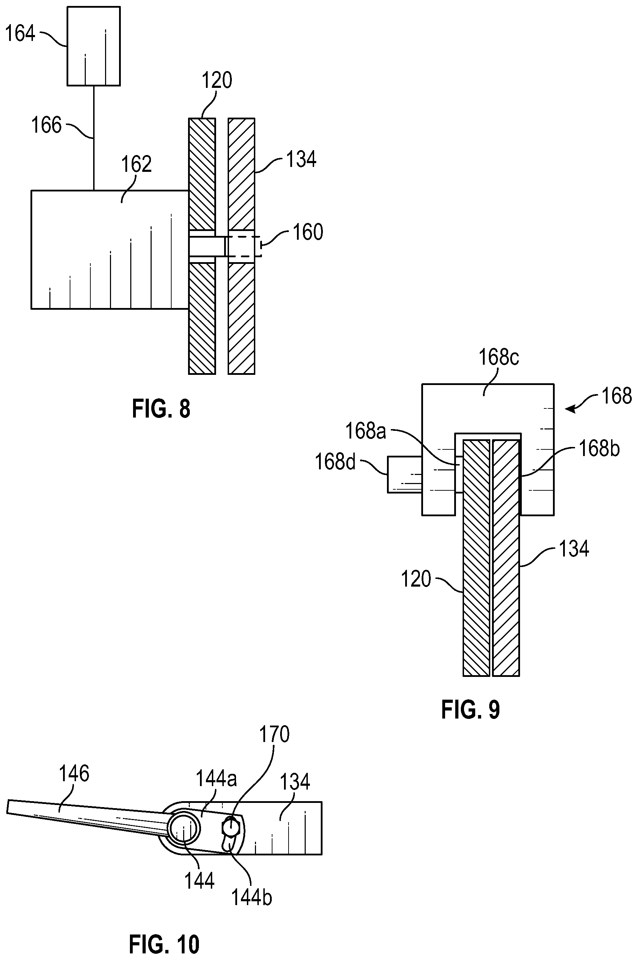

FIG. 8 shows another example of a locking pin 160. In this case, the locking pin 160 is remotely operable, either directly or via a suitable linkage, by a motor 162. The motor 162 may be an electric motor (e.g., a solenoid or rotary motor), a hydraulic piston and cylinder actuator, and so on. The motor 162 is connected to a remote control 164 by a control link 166. In one example, the motor 162 may be a piston and cylinder arrangement with the piston acting as the locking pin, the remote control 164 may be a hydraulic valve connected to a supply of pressurized liquid, and the control link 166 may be a hydraulic line that is configured to control the position of the piston. As another example, the motor 162 may be a solenoid, the locking pin 160 may be (or be coupled to) the solenoid's plunger, the remote control may be an electric switch connected to an electrical power supply, and the control link 166 may be electrical wires that convey the electrical power to activate the solenoid to move the locking pin 160 to the position shown in dashed lines in FIG. 8,

FIG. 9 shows another example of a lock, which is in the form of a clutch 168. The clutch 168 is configured to press the primary roller arm 120 and the adjacent secondary roller arm 134 together to cause them to move in unison. In this case, the clutch 168 includes a first clutch face 168a and a second clutch face 168b that are moved together to clamp the primary roller arm 120 and the secondary roller arm 134 together. The first and second clutch faces 168a, 168b may be controlled using a motor, remote control and control link, as described above in relation to FIG. 8, or otherwise controlled. For example, the first clutch face 168a may be provided on a caliper 168c, and the second clutch face 168b may be provided on piston 168d that is movably mounted on the caliper 168c. The piston 168d may be operated by a hydraulic line that drive a hydraulic piston and cylinder, or any other suitable motor. The piston 168d also may be provided as a threaded fastener that can be manually tightened to generate the necessary clamping force, as in the manner of a conventional C-clamp. The contacting faces of the primary roller arm 120 and secondary roller arm 134 may include locking features, such as tabs, ribs or teeth, that intermesh with each other when they are pressed together, to provide a positive mechanical lock against relative motion, rather than relying solely on static friction to hold the arms together.

Other locks may be provided at other locations, such as a clutch 168 or locking pin 160 located where the primary roller arm pivot 122 overlaps the secondary roller arm pivot 136. Other options and variations of locks and mechanisms for operating locks will be apparent to persons having ordinary skill in the art, in view of the present disclosure.

Referring back to FIGS. 2-4, embodiments of a windguard assembly 116 also may include a tine bar 144. The tine bar 144 is secured to the secondary roller assembly 132 at a location rearward to the secondary roller 138 (i.e., rearward being opposite to the forward direction F), and extends along a tine bar axis 144c (see FIG. 4) that is parallel to the secondary roller rotation axis 140. Tine bar tines 146 extend rearwardly from the tine bar 144 over the tine reel rotation axis 104a. The tine bar tines 146 help guide the crop material as it moves towards the bale-forming chamber 22, as known in the art.

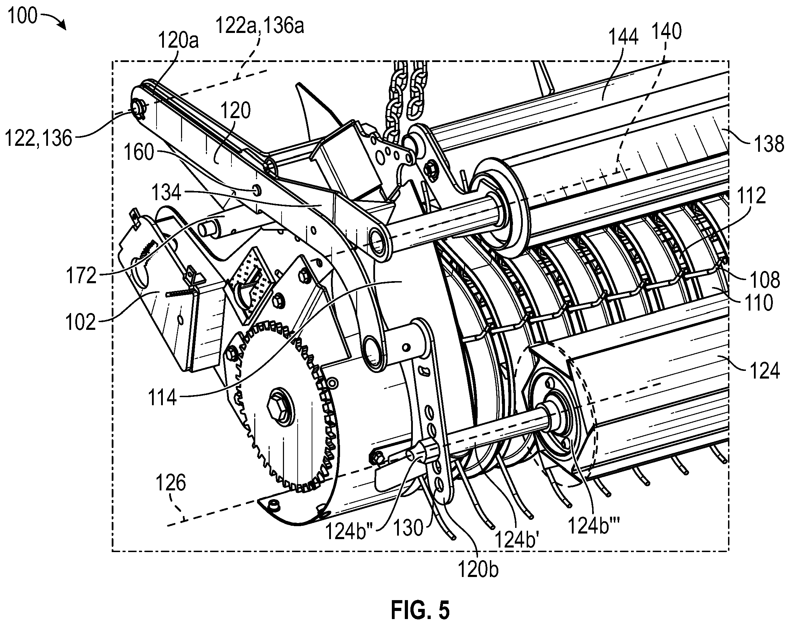

The tine bar 144 optionally may be adjustably mounted to the secondary roller assembly 132. For example, as shown in FIGS. 5 and 10, the tine bar 144 may have circular ends that are pivotally mounted in respective circular openings in each secondary roller arm 134, with a tab 144a at each end of the tine bar 144. The tabs 144a have semicircular slots 144b through which a bolt 170 is passed. The bolt 170 is secured to a corresponding hole in the secondary roller arm 134. Adjustment is made by loosening the bolt 170, rotating the tine bar 144 about the tine bar axis 104a, and tightening the bolt 170. Other mechanisms may be used in other embodiments.

A baler assembly 100 also may have other features, such one or more lower travel stops 172 and/or upper travel stops 174 to define the limits of pivoting movement for one or both of the primary roller assembly 118 and the secondary roller assembly 132. In the embodiment of FIGS. 2-5, there is a single lower travel stop 172 to stop the travel of both the primary roller assembly 118 and the secondary roller assembly 132. In the embodiments of FIGS. 6 and 7, there are separate lower travel stops 172 and upper travel stops 174 to separately control the motion of the primary roller assembly 118 and the secondary roller assembly 132. Embodiments also may include a lockout mechanism to hold one or both of the primary roller assembly 118 and the secondary roller assembly 132 generally out of the path of the crop.

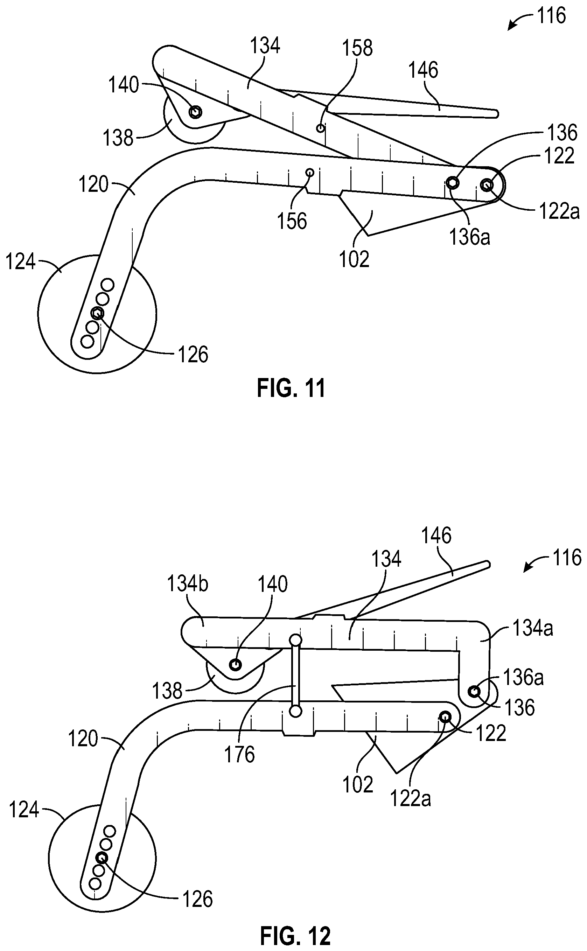

In other embodiments the primary roller arm pivot axis 122a may be parallel to, but not collinear with the secondary roller arm pivot axis 136a. For example, FIG. 11 shows an embodiment in which the secondary roller arm pivots 136 are connected to the primary roller arms 120 at a location offset from the primary roller arm pivots 122. As with the previous embodiment, the primary roller arms 120 have first locking holes 156, and the secondary roller arms 134 have second locking holes 158, and a lock (e.g., a locking pin 160) can be inserted through both locking holes 156, 158 to prevent relative rotation between the primary roller arms 120 and secondary roller arms 134. In this example, when the lock is disengaged, the primary roller assembly 118 and the secondary roller assembly 132 are still independently pivotable about the primary roller arm pivot axis 122a. However, the secondary roller arm pivot axis 136a moves through an arcuate path along with the primary roller arm 120. When the lock is engaged, the primary roller assembly 118 and the secondary roller assembly 132 are locked to move in unison about the primary roller arm pivot axis 122a, as in the previous example.

FIG. 12 shows another example in which the secondary roller arm pivots 136 are separately connected to the baler assembly frame 102 at a location offset from the primary roller arm pivots 122. Thus, the secondary roller arm pivot axis 136a is not collinear with the primary roller arm pivot axis 122a, and the secondary roller arm pivot axis 136a does not move along with the primary roller arms 120. In this case, a link 176 may be provided to selectively connect the primary roller arm 120 to the secondary roller arm 134 to cause them to move in unison in the manner of a four-bar linkage, but not about the same pivot axis. The position and/or length of the link 176 may be adjustable to change the manner in which the primary roller assembly 118 and secondary roller assembly 132 move relative to each other.

In each of the foregoing embodiments, the lock is operable between an unlocked configuration when the lock is disengaged, in which the primary roller assembly 118 and the secondary roller assembly 132 are independently pivotable about the primary roller arm pivot axis 122a and the secondary roller arm pivot axis 136a, respectively, and a locked configuration when the lock is engaged, in which the primary roller assembly 118 and the secondary roller assembly 132 are locked to move in a predefined relationship. In the case of the embodiments of FIGS. 1-7 and 11, the predefined relationship is common rotation about the primary roller arm pivot axis 122a. In the case of the embodiment of FIG. 12, the predefined relationship is that of a four arm linkage. While the lock is expected to provide a benefit of allowing the primary roller assembly 118 and secondary roller assembly 132 to operate in unison, it will be understood that a lock is not required in all embodiments.

It is believed that providing independently moving first and second roller assemblies 118, 132 can, at least in some cases, provide greater efficiency than conventional balers having a single windguard roll (see, e.g., U.S. Pat. No. 10,028,438) or a multiple windguard rollers that are permanently connected to move in unison. The windguard roller is intended to condition the crop to help funnel and guide it into the tine reel, and thereby assist with intake efficiency and volume flow rate. However, it is believed that a single windguard roller is not fully efficient because, for example, it can lift the crop material vertically to a point where it is not in effective contact with the tine reel, thus reducing the efficiency of the tine reel and reducing the overall crop material flow rate. Such vertical movement is believed to be caused by a flywheel effect of the roller, in which the roller has sufficient rotational momentum to lift the crop material as it passes behind the roller, rather than simply holding the crop material down or towards the tine reel.

Pickups having upstream and downstream windguard rollers that move in unison are intended to provide two locations at which the crop material flow is controlled to help maintain the efficiency of the tine reel and prevent vertical crop movement caused by the flywheel effect. For example, the downstream windguard roller can help prevent the upstream windguard roller from lifting the crop material away from the tine reel. However, it is believed that variations in crop material composition cannot always be effectively handled by such devices. For example, when encountering a dense or large mass of crop material, the upstream windguard roller can lift high enough that the downstream windguard roller is raised too far away from the tine reel to provide efficient crop control. Similarly, when a large or dense mass of crop material reaches the downstream windguard roller, it can lift the upstream windguard roller high enough to inhibit efficiency of that roller. Thus, in some crop conditions, it is possible that providing two windguard rollers that move together can be less efficient than having a single windguard roller.

Various efforts have been made to improve baler crop intake efficiency, but such efforts typically focus on adding additional powered equipment to manage the crop flow. Thus, such solutions can increase complexity, weight and cost of the baler.

Without being constrained by any particular theory of operation or performance metrics, it is believed that providing two independently moving windguard rollers can mitigate problems related to crop lifting by the upstream roller, as well as problems associated with irregular crop flow negatively affecting the performance of assemblies having two rollers that always move together. For example, the primary and secondary windguard rollers 124, 138 can maintain generally continuous control of the crop material along a desired crop flow path P (schematically shown in FIG. 7) and can independently move to account for variations in the crop flow, so that movement of one roller does not affect the performance of the other roller. Furthermore, in some embodiments, the individual performance of the primary roller 124 and the secondary roller 138 can be individually adjusted (e.g., by moving the position of the roller on the arms) to account for different crop conditions, such as variations in crop density. Still further, when it is expected with certain crop conditions that independent movement of the rollers might not be more efficient, embodiments also might be configured to lock the two windguard assemblies 118, 132 together. Other advantages and benefits may be appreciated in view of this disclosure and with implementation of embodiments.

It will be appreciated that a baler assembly such as described herein may be provided in various states of assembly. For example, a baler assembly such as described above may be used in an agricultural baler 10 having a main frame 12, wheels 14 supporting the main frame 12 for movement on a ground surface G, and a bale-forming chamber 22 to process the crop material into bales. As another example, embodiments may be provided as a windguard assembly 116 that is not connected to or provided with other components of a baler. For example, a windguard assembly 116 may be provided as a replacement part or a retrofit part for an existing machine, which may be facilitated by connecting the parts of the windguard assembly 116 to one or more baler assembly subframes 102a as shown in FIG 3. In this case, the baler assembly subframes 102a can be joined with the remainder of the structure to form the entire baler assembly frame 102.

## Claims

1. An agricultural baler assembly (100) comprising:
a baler assembly frame (102);
a pickup assembly mounted to the baler assembly frame (102) and comprising a tine reel (104) configured to rotate about a tine reel rotation axis (104a), a plurality of tines (108) extending perpendicular to the tine reel rotation axis (104a), and a pickup drum (110) surrounding at least a forward side (104b) of the tine reel (104) and having slots (112) through which the plurality of tines (108) extend;
a primary roller assembly (118) comprising primary roller arms (120) pivotally mounted to the baler assembly frame (102) to pivot about a primary roller arm pivot axis (122a) and a primary roller (124) rotatably mounted to the primary roller arms (120) at a primary roller rotation axis (126) that extends parallel to the tine reel rotation axis (104a), wherein the primary roller rotation axis (126) is spaced a first distance (D1) from the primary roller arm pivot axis (122a); and
a secondary roller assembly (132),
**characterized in that**:
the secondary roller assembly (132) comprises secondary roller arms (134) pivotally mounted to the baler assembly frame (102) or the primary roller arms (120) to pivot about a secondary roller arm pivot axis (136a) and a secondary roller (138) rotatably mounted to the secondary roller arms (134) at a secondary roller rotation axis (140) that extends parallel to the tine reel rotation axis (104a), wherein the secondary roller rotation axis (140) is spaced a second distance (D2) from the primary roller arm pivot axis (122a), and the second distance (D2) is less than the first distance (D1).

2. The agricultural baler assembly (100) of claim 1, further comprising:
a lock (160, 168, 176) configured to selectively connect the primary roller assembly (118) to the secondary roller assembly (132), wherein the primary roller assembly (118) and the secondary roller assembly (132) are selectively operable in:
an unlocked configuration when the lock (160, 168, 176) is disengaged, in which the primary roller assembly (118) and the secondary roller assembly (132) are independently pivotable about the primary roller arm pivot axis (122a) and the secondary roller arm pivot axis (136a), respectively, and
a locked configuration when the lock (160, 168, 176) is engaged, in which the primary roller assembly (118) and the secondary roller assembly (132) are locked to move in a predefined relationship.

3. The agricultural baler assembly (100) of claim 2, wherein the lock (160, 168, 176) comprises at least one pin (160) selectively insertable through a first hole (156) in one of the primary roller arms (120) and a second hole (158) in one of the secondary roller arms (134), wherein the first hole (156) and the second hole (158) are spaced from the primary roller arm pivot axis (122a).

4. The agricultural baler assembly (100) of claim 2, wherein the lock (160, 168, 176) comprises at least one clutch (168) configured to selectively compress one of the primary roller arms (120) against one of the secondary roller arms (134).

5. The agricultural baler assembly (100) of claim 2 or 3, wherein the lock (160, 168, 176) is manually-operable.

6. The agricultural baler assembly (100) of claim 2 or 3, wherein the lock (160, 168, 176) is operatively connected to a remote control (164).

7. The agricultural baler assembly (100) of any of the preceding claims, wherein the primary roller (124) and the secondary roller (138) are both in front of a vertical apex (108b) of a travel path (108a) of the tines (108).

8. The agricultural baler of assembly (100) of any of the preceding claims, wherein the primary roller arm pivot axis (122a) and the secondary roller arm pivot axis (136a) are both behind the vertical apex (108b) of the travel path (108a) of the tines (108).

9. The agricultural baler assembly (100) of any of the preceding claims, further comprising a tine bar (144) connected to the secondary roller arms (134) and extending along a tine bar axis (144c) that is parallel to the secondary roller rotation axis (140), and a plurality of tine bar tines (146) extending from the tine bar (144) in a direction away from the secondary roller rotation axis (140) and over the tine reel rotation axis (104a).

10. The agricultural baler assembly (100) of claim 9, wherein the tine bar (144) is rotatably adjustable relative to the secondary roller arms (134) about the tine bar axis (144c).

11. The agricultural baler assembly (100) of any of the preceding claims, wherein the secondary roller arm pivot axis (136a) is collinear with the primary roller arm pivot axis (122a).

12. The agricultural baler assembly (100) of any of the preceding claims, wherein the secondary roller arm pivot axis (136a) is offset from the primary roller arm pivot axis (122a).

13. The agricultural baler assembly (100) of claim 12, wherein:
each secondary roller arm (134) is pivotally connected to a respective one of the primary roller arms (120), and the secondary roller arm pivot axis (136a) moves with the primary roller arms (120); or
the secondary roller arms are pivotally connected to the baler assembly frame (102).

14. The agricultural baler assembly (100) of claim 2 or either of claims 5 and 6 when dependent upon claim 2, wherein the secondary roller arm pivot axis (136a) is offset from the primary roller arm pivot axis (122a), the secondary roller arms (134) are pivotally connected to the baler assembly frame (102), and the lock (160, 168, 176) comprises a linkage (176) that is selectively connectable between the primary roller assembly (118) and the secondary roller assembly (132) to engage the lock (160, 168, 176).

15. An agricultural baler (10) comprising:
a main frame (12);
wheels (14) supporting the main frame (12) for movement on a ground surface (G);
a bale-forming chamber (22); and
an agricultural baler assembly (100) according to claim 1 operatively connected to the main frame (12) with the baler assembly (100) arranged to pick up crop material from the ground surface (G) and direct the crop material towards the bale-forming chamber (22).
